# EUROPÄISCHE PATENTANMELDUNG

(11) **EP 1 557 618 A2**
(43) Veröffentlichungstag der Anmeldung: **27.07.2005**
(21) Anmeldenummer: 05100485.1
(22) Anmeldetag: 26.01.2005
(51) Int. Cl.: F24F 1/00

(54) **Raumklimaeinrichtung**

(30) Priorität: 26.01.2004 AT 922004
(71) Anmelder: WAVIN B.V., 8011 CW Zwolle (NL)
(72) Erfinder: Steiner, Josef, 3370 Ybbs/Donau (AT)
(74) Vertreter: Müllner, Erwin, Dr.

(57) **Zusammenfassung**

Die Raumklimaeinrichtung weist eine Belüftung und eine Raumheizung bzw. Raumkühlung (7) auf. Die Belüftung hat einen Zuluftventilator (4) und mindestens einen Wärmetauscher (5) zur Abgabe von Wärme und/oder Kälte an die Zuluft. Es ist weiters ein zentrales Wärme- und/oder Kühlsystem vorgesehen, das einen Wärmeträger zentral erwärmt und/oder kühlt, wobei der Wärmetauscher (5) der Belüftung und die Raumheizung bzw. Raumkühlung (7) in Serie an das zentrale Wärme- und/oder Kühlsystem angeschlossen sind. Dabei durchströmt der Wärmeträger zuerst den Wärmetauscher (5). Parallel zur Raumheizung bzw. Raumkühlung (7) ist eine Kurzschlussleitung (12) für den Wärmeträger vorgesehen, an deren Abzweigung ein Dreiwegventil (6) angeordnet ist. Das Dreiwegventil (6) und damit der Durchfluss des Wärmeträgers durch die Raumheizung bzw. Raumkühlung (7) wird in Abhängigkeit von der Raumtemperatur gesteuert. Die Belüftung erfolgt dezentral und kann jeweils im Außenwandbereich eines Raumes angeordnet sein. Sie wird in Abhängigkeit von der Luftqualität gesteuert.

## Beschreibung

### Technisches Gebiet

Die vorliegende Erfindung betrifft eine Raumklimaeinrichtung mit einer Belüftung und mit einer Raumheizung bzw. Raumkühlung, wobei die Belüftung einen Zuluftventilator und mindestens einen Wärmetauscher zur Abgabe von Wärme und/oder Kälte an die Zuluft aufweist und wobei die Raumheizung bzw. Raumkühlung durch mindestens einen Heiz- bzw. Kühlkörper, Wand-, Decken- und/oder Bodenheizung bzw. -kühlung realisiert ist, wobei weiters ein zentrales Wärme- und/oder Kühlsystem vorgesehen ist, das einen Wärmeträger zentral erwärmt und/oder kühlt, wobei der Wärmetauscher der Belüftung und die Raumheizung bzw. Raumkühlung in Serie an das zentrale Wärme- und/oder Kühlsystem angeschlossen sind, wobei der Wärmeträger zuerst den Wärmetauscher durchströmt.

### Stand der Technik

Die im Februar 2002 in Deutschland eingeführte Energieeinsparverordnung (EnEV 2002) fordert für neu zu errichtende Gebäude wesentlich höhere Wärmedämmstandards und eine luftdichte Gebäude-Umfassungsfläche, wobei diese so ausgeführt werden soll, dass der zum Zweck der Gesundheit erforderliche Mindestluftwechsel sichergestellt wird. Dieser Mindestluftwechsel kann durch die Fensterlüftung im Winter während der Abwesenheit des Nutzers oder in den Schlafphasen nicht energiesparend bewirkt werden. Aber auch bei hohen, sommerlichen Außentemperaturen ist die Fensterlüftung ebenso wie im Winter ungeeignet. Durch den unkontrollierten Luftaustausch und der fehlenden Wärmerückgewinnung führt die Fensterlüftung zu einem erhöhten Energieverbrauch und entspricht somit nicht den Anforderungen der Energieeinsparverordnung in Deutschland.

Wird der Mindestluftwechsel nicht hergestellt, können Schimmelpilzwachstum und eine gesundheitliche Beeinträchtigung für die Menschen entstehen. Aus diesen gravierenden Nachteilen der Fensterlüftung resultiert die Forderung nach einer raumlufttechnischen Anlage. Sie stellt den hygienisch notwendigen Mindestluftwechsel zuverlässig her und verhindert das Risiko von Schimmelpilzwachstum. Zudem besteht die Möglichkeit der Wärmerückgewinnung. So können die Lüftungswärmeverluste auf einen Bruchteil des ursprünglichen Wertes reduziert werden.

Die Energieeinsparverordnung hat jedoch nicht nur Auswirkungen auf den Mindestluftwechsel, sondern durch die verbesserten Wärmedämmmaßnahmen auch auf den Heizwärmebedarf. Dieser hat sich durch die Niedrigenergiebauweise um ca. 50% reduziert und wird sich in den kommenden 10 Jahren durch die Passivenergiebauweise nochmals halbieren.

Um dieses Ziel zu erreichen, wird vermehrt eine Leichtbauweise mit wenig Speichermasse und großen, nach Süden orientierten Fensterflächen angewendet. Dadurch besteht im Sommer ein erhöhter Kühlbedarf, insbesondere muss die Frischluft für den Mindestluftwechsel auf Raumlufttemperaturen abgekühlt werden. Die neue Energieeinsparverordnung in Deutschland bewirkt in Europa eine dermaßen veränderte Bauweise, dass zur Raumklimatisierung auch eine neue, diesen Gegebenheiten Rechnung tragende Lüftungs-, Heiz- und Kühltechnik mit folgenden Schwerpunkten erforderlich ist:
- Sicherstellung des hygienisch erforderlichen Luftwechsels,
- benützergerechte Abdeckung des geringen Heizwärmebedarfs,
- Raumkühlung im Sommer.

Stand der Technik zur Lösung dieser Anforderungen sind Nur-Luftsysteme, die über ein Zentralgerät und ein Zu- und Abluft-Verrohrungssystem alle Räume mit vorgewärmter oder gekühlter Luft versorgen. Der Nachteil dieser Systeme sind die kostenintensiven Installationen des Zu- und Abluftsystems, die geringe Akzeptanz der Zu- und Abluftgitter im Wohnbereich, die Verschmutzung der Luftkanäle, die nur mit erhöhtem Aufwand innen gereinigt werden können und dadurch zu einer verminderten Frischluftqualität führen.

Ein weiterer, gravierender Nachteil dieser Luftsysteme ist, dass zur Abdeckung des Heiz- oder Kühlbedarfs ein wesentlich höherer Lufttransport durch die Wohn- und Arbeitsräume entsteht, als dies aus hygienischen Gründen erforderlich wäre. Vielfach kommt es dadurch auch zu Zugerscheinungen, Lärmbelästigung und Feinstaubbelastung.

Um diese Nachteile zu vermeiden, werden zentrale Wohnungslüftungssysteme angeboten, die nur den Mindestluftwechsel herbeiführen. Bei diesen Systemen ist jedoch ein zusätzliches Heiz-/Kühlsystem erforderlich, wodurch sich die Anschaffungskosten wesentlich erhöhen. Darüber hinaus hat auch dieses System den Nachteil der kostenintensiven Verrohrung der Zu- und Abluftkanäle und die Verschmutzungsproblematik.

Stand der Technik sind weiters Gebläsekonvektoren, die dezentral in den Wohn- und Arbeitsräumen angeordnet und über einen Frischluftkanal durch die Außenwand ausgestattet sind. Dadurch kann auf ein Zuluftsystem verzichtet werden, über ein Abluftsystem besteht die Möglichkeit zur zentralen Wärmerückgewinnung. Auch diese Systeme haben den Nachteil, dass zur Abdeckung des Heiz- oder Kühlbedarfs ein wesentlich erhöhter Luftvolumenstrom erforderlich ist, der zu unangenehmen Geräusch- und Zugerscheinungen führt. Auch der Wärmkomfort ist bei Verwendung von Gebläsekonvektoren nicht zufrieden stellend, weil es sich dabei um eine ausschließliche Konvektionsheizung/Kühlung handelt.

Solche Gebläsekonvektoren sind in der DE 10128379 A beschrieben. Hier ist die Belüftung in der Außenwand eines Gebäudes untergebracht. Die Frischluft wird durch einen Wärmetauscher erwärmt bzw. gekühlt.

Eine Raumklimaeinrichtung der eingangs genannten Art ist aus der **DE 3433452 A** bekannt. Dort sind ein Wärmetauscher und ein Heizkörper gezeigt, die in Serie geschaltet sind. Die Flächenheizung besteht aus einem Plattenheizkörper zur Raumbeheizung, auf dem ein Luftverteilkasten mit Wärmetauscher zur teilweisen Luftvorwärmung montiert ist. Der Plattenheizkörper ist nicht zur Raumkühlung geeignet. Die Raumluft wird über Luftkanäle von der zentralen Lüftungsanlage in den Luftverteilkasten geleitet. Damit treten all die oben beschriebenen Nachteile zentraler Belüftungssysteme auch hier auf.

Problematisch ist dabei auch die Regelung. Der Wärmetauscher und die Flächenheizung sind in Serie geschaltet und werden gemeinsam durch ein Thermostatventil geregelt. Wenn der Raum im Winter ausreichend warm ist, dann schließt das Thermostatventil, und es strömt kalte Luft in den Raum. Dies ist natürlich extrem unangenehm.

### Offenbarung der Erfindung

### Technische Aufgabe

Ziel der nachstehend beschriebenen Erfindung ist es, durch ein neues Raumklimasystem die Anforderungen der Energieeinsparverordnung in Deutschland, aber auch die Anforderungen beispielsweise der niederösterreichischen Wohnbauförderung zu erfüllen, die Anschaffungskosten zu verringern und ein gesünderes Raumklima mit höchstmöglicher Behaglichkeit zu schaffen.

### Technische Lösung

Diese Aufgabe wird durch eine Raumklimaeinrichtung der eingangs genannten Art erfindungsgemäß dadurch gelöst, dass parallel zur Raumheizung bzw. Raumkühlung eine Kurzschlussleitung für den Wärmeträger vorgesehen ist, an deren Abzweigung ein Dreiwegventil angeordnet ist, und dass das Dreiwegventil und damit der Durchfluss des Wärmeträgers durch die Raumheizung bzw. Raumkühlung in Abhängigkeit von der Raumtemperatur gesteuert ist.

Wesentliches Merkmal der Erfindung ist es, dass der Heiz- oder Kühlbedarf, gesteuert über einen Raumthermostat, über die dem Wärmetauscher nachgeschaltete Raumheizung erfolgt. Der Wärmetauscher wird stets auf der gleichen Temperatur gehalten (abhängig von der Vorlauftemperatur, unabhängig von der Stellung des Dreiwegventils), und die Belüftung erfolgt unabhängig vom Heiz- und/oder Kühlbedarf. Im einfachsten Fall ist für die Belüftung ein Dreistufenschalter vorgesehen. Man kann also mit dem geringst möglichen Luftaustausch und sehr wenig Konvektion auskommen, was sich auf den Energiebedarf positiv auswirkt und die Behaglichkeit fördert. Andererseits erfolgt die Raumbeheizung und -kühlung bedarfsgerecht z.B. durch ein gesundheitsförderndes Flächensystem mit großem Wärmestrahlungsanteil, unabhängig von der Belüftung. Somit können auch innerhalb der Wohnung verschiedene Temperaturzonen eingestellt werden.

Besonders günstig ist es, dass wegen der Serienschaltung von Wärmetauscher und Raumheizung die Temperatur des Wärmetauschers im Falle der Heizung über der Temperatur der Raumheizung und im Falle der Kühlung unter der Temperatur der Raumkühlung liegt. Dadurch wird die Raumheizung bzw. Raumkühlung durch die Belüftung optimal unterstützt. Die Raumheizung muss nur die Wärmeverluste (Kälteverluste) abdecken, aber nicht die Frischluft erwärmen oder kühlen. Im Falle der Kühlung findet die gesamte Kondenswasserbildung im Bereich des Wärmetauschers statt, an der Raumkühlung (die ja wärmer als der Wärmetauscher ist) kommt es zu keiner Kondenswasserbildung mehr. Schließlich ist es auch günstig, dass die Zuluft immer erwärmt bzw. gekühlt wird, auch dann, wenn die Raumheizung (wegen ausreichend hoher Temperatur) bzw. die Raumkühlung (wegen ausreichend niedriger Temperatur) abgeschaltet hat. Es kann also niemals einen Betriebszustand geben, wo die Außenluft untemperiert eingeblasen wird.

Vorzugsweise ist der Luftstrom der Belüftung in Abhängigkeit von einem im Raum angeordneten Luftqualitätsfühler, z.B. einem Kohlendioxidsensor, gesteuert, um einen minimalen, hygienisch erforderlichen Luftwechsel zu erreichen. Auf diese Weise kommt man mit dem minimal erforderlichen Luftstrom und damit mit den geringst möglichen Heizkosten (Kühlkosten) aus. Wie erwähnt, ist dies aber nicht unbedingt notwendig, man kann den Luftstrom auch händisch vorgeben, beispielsweise mit einem 3-Stufen-Schalter oder auch mit einem stufenlosen Schalter.

Weiters wird bevorzugt, dass die Belüftung dezentral erfolgt, wobei es günstig ist, wenn sie jeweils im Außenwandbereich eines Raumes angeordnet ist. Wie oben erwähnt ist eine zentrale Belüftung mit Nachteilen verbunden: Platzbedarf für die Rohrleitungen, Verschmutzung der Rohrleitungen (insbesondere durch Mikroorganismen), Investitionskosten. Die dezentrale Lösung hat oft den Nachteil des Platzbedarfs im jeweiligen Raum, und dieser Nachteil wird durch die Anordnung im Außenwandbereich beseitigt.

Es ist günstig, wenn die Belüftung zum Raum hin durch eine Abdeckung abgeschlossen ist und in der unteren und/oder oberen Stirnseite der Abdeckung Schlitze für den Luftstrom vorgesehen sind. Dadurch sind einerseits die Schlitze nicht sichtbar und anderseits wird die Luft nicht direkt in den Raum geleitet, sondern auf den Boden bzw. die Decke gerichtet, sodass Zugluft weitestgehend vermieden ist.

Um Platz für die Schlitze zu schaffen, kann die Abdeckung zur Belüftung hin eine ebene Fläche und zum Raum hin eine gewölbte Fläche aufweisen. Dadurch ist in der Mitte der Abdeckung genug Platz für die Schlitze, trotzdem macht die Abdeckung optisch einen schlanken Eindruck und hat vor allem keine vorstehenden Kanten.

Bei Umbauten bestehender Anlagen ist es günstig, wenn die Raumheizung bzw. Raumkühlung einen Ventilator- und/oder Flächenheizkörper aufweist. Bei neuen Anlagen werden Wand-, Decken- und Fußbodenheizungen bzw. -kühlungen vorgezogen. Ein Ventilator-Heizkörper bzw. -Kühlkörper kann kleiner sein als ein Flächenheizkörper (Flächenkühlkörper), was vor allem bei nachträglichem Umbau einer Heizung zu einer Klimaanlage mit Kühlmöglichkeit wichtig sein kann.

Um Geräuschbelästigungen zu vermeiden ist es zweckmäßig, wenn im Außenluftanschluss der Belüftung ein Schalldämmelement integriert ist.

Im Ansaugkanal oder in der Ansaugkammer der Belüftung kann zur Luftreinigung ein Filter integriert sein. Beispielsweise kann im Ansaugkanal ein Filter der Güteklasse G3 integriert sein oder in der Ansaugkammer ein Filter der Güteklasse F7.

Vorzugsweise ist der Zuluftventilator ein stufenlos regelbares Radialgebläse mit Körperschallentkopplung, das nach dem Filter montiert ist, wobei nach dem Radialgebläse ein Überdruckkanal mit Luftdurchströmungsöffnungen zur gleichmäßigen Durchströmung des Wärmetauschers angeordnet sein kann.

Der Wärmetauscher kann ein Lamellen-Gegenstromwärmetauscher sein.

Weiters ist es im Hinblick auf den Frostschutz günstig, wenn im Zuluftstrom nach dem Wärmetauscher ein Frostschutzthermostat angeordnet ist, der bei Absinken der Zulufttemperatur auf unter +8°C den Zuluftventilator abschaltet. Wenn ein Gebäude im Winter leer steht und nicht beheizt ist, dann soll natürlich auch die Belüftung abgeschaltet sein, um eine unnötige Abkühlung zu vermeiden.

Wie bereits weiter oben erwähnt, bildet sich das gesamte Kondenswasser beim Wärmetauscher. Es ist daher günstig, wenn unterhalb des Wärmetauschers eine Kondensatwanne mit Anschluss für den Kondensatablauf angeordnet ist.

Das Gehäuse der Belüftung kann aus Stahl hergestellt sein, wobei die Rück- und Seitenwände sowie die vordere Abdeckung im Luft führenden Bereich wärme- und schallgedämmt sind.

### Kurze Beschreibung der Zeichnungen

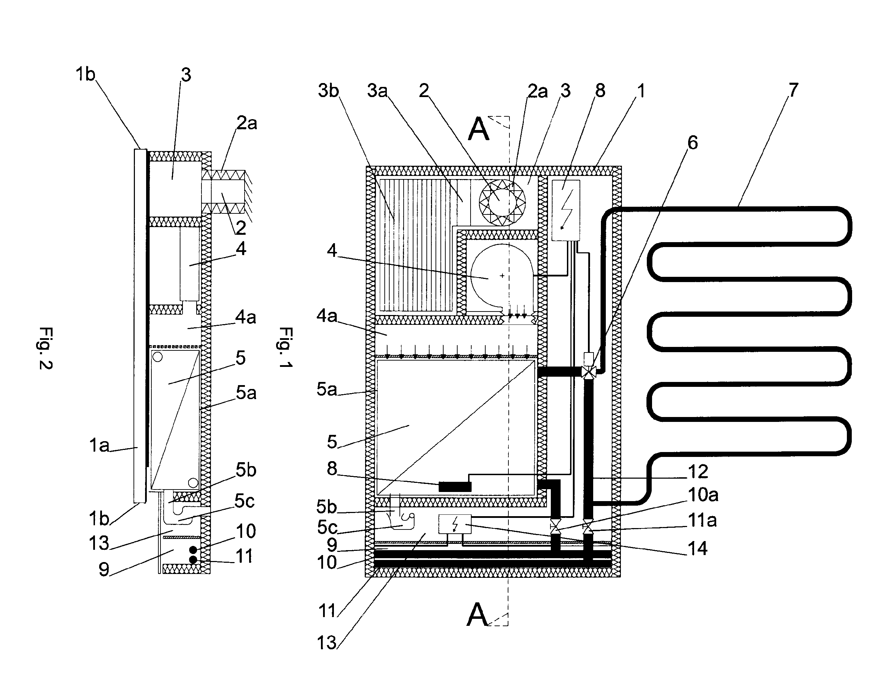

Anhand der beiliegenden Zeichnung wird die vorliegende Erfindung näher erläutert. Es zeigt: Fig. 1 einen Längsschnitt durch eine erfindungsgemäße Raumklimaeinrichtung, und Fig. 2 einen Querschnitt entlang der Linie A-A in Fig. 1.

### Beste Ausführungsform der Erfindung

Die Raumklimaeinrichtung weist ein Gehäuse 1 auf, das vorzugsweise in Form eines wärmegedämmten Unterputz- oder Aufputzschranks mit verstellbarem Rahmen ausgeführt ist. Zum Raum hin ist eine Abdeckung 1a in Form einer leicht bombierten Tür vorgesehen, die an ihren oberen und unteren Stirnseiten mit Schlitzen 1 b für die Zuluft versehen ist. Die Rückwand beinhaltet einen Außenluftanschluss mit einem Ansaugkanal 2 von mindestens 100 mm Durchmesser, in dem ein Schalldämmelement 2a integriert ist. An den Außenluftanschluss ist ein Wanddurchführungsrohr mit außen liegendem Wetterschutzgitter angeschlossen.

Im Bereich des Außenluftanschlusses befindet sich eine Ansaugkammer 3. Die Außenluft durchströmt die Ansaugkammer 3 vertikal, von oben nach unten. In der Ansaugkammer 3 herrscht Außenklima.

Die Ansaugkammer 3 ist mit einem eigenständigen Revisionsdeckel versehen. Dieser kann für Wartungsarbeiten ohne Werkzeugeinsatz abgenommen werden. Rändelschrauben ermöglichen die Demontage von Hand.

Im Brüstungselement kommt vorzugsweise ein Gleichstromradialgebläse als Zuluftventilator 4 zum Einsatz. Um die Übertragung von Körperschall zu verhindern, wird der Motor mit einer Montageplatte verklebt. Der Klebstoff dämpft die Körperschallübertragung.

Der Zuluftventilator 4 wird über eine Steuerung geregelt, sie erlaubt die Veränderung der Drehzahl. Bei einer Steuerspannung von 1,4 V spricht der Zuluftventilator 4 an und erreicht bei 10V Steuerspannung die maximale Förderleistung.

Der Zuluftventilator 4 und das zugehörige Netzteil sind in der Ansaugkammer 3 untergebracht. Sie entsprechen der Schutzart IP 44 nach DIN VDE 0530-5. Die klimatischen Bedingungen schaden den Bauteilen nicht, sondern sorgen für eine natürliche Kühlung.

In DIN EN 779 sind die Filterklassen G3 bis F5 für den Einsatz in raumlufttechnischen Anlagen vorgeschrieben. Es werden 2 Filter benötigt. In dem Ansaugkanal 2 befindet sich ein Schalldämmelement 2a, die Zuluft gelangt dann in der Folge in die Ansaugkammer 3, in der ein Filter 3a der Güteklasse G3 angeordnet ist. Dieser soll zum einen den Ansaugkanal vor Verschmutzung schützen, zum anderen das Wartungsintervall des folgenden Feinfilters 3b verlängern. Dieser Feinfilter der Güteklasse F7 ist ein Innenraumfilter. Mit der Güteklasse F7 können auch Pollen ausgefiltert werden.

Vor und hinter diesem Filter 3b wird die Druckdifferenz gemessen. Dadurch kann die Steuerung bei großen Druckdifferenzen ein Signal ausgeben, welches auf einen notwendigen Filterwechsel hinweist.

Zwischen der Ansaugkammer 3 und einem Wärmetauscher 5 befindet sich ein Überdruckkanal 4a. Er dient dazu, die Druckverhältnisse über die Breite des Wärmetauschers 5 zu homogenisieren. Somit wird eine gleichmäßige Durchströmung des Wärmetauschers 5 und somit ein maximaler Wärmeübergang erreicht.

Als Wärmetauscher 5 ist ein Wasser-Luft-System vorgesehen. Dieses System erlaubt den Einsatz von bewährter Installationstechnik. Der Wärmetauscher 5 wird an einen Wasserheiz-/Kühlkreis angeschlossen. Das System kann von kaltem Wasser und von warmem Wasser durchströmt werden. Dies vereinfacht den Einsatz der Raumklimaeinrichtung bei Sanierungen vorhandener Bausubstanz. Die Raumklimaeinrichtung kann die Rohrleitung des alten Heizsystems nutzen. Es kommt vorzugsweise ein Lamellenwärmetauscher zum Einsatz.

Die Dimensionierung des Wärmetauschers 5 erfolgt dermaßen, dass die für den hygienisch erforderlichen Luftwechsel zugeführte Außenluft im Winter auf mindestens 22°C erwärmt und im Sommer auf mindestens 18°C abgekühlt werden kann.

Der Wärmetauscher 5 ist in einer Zuluftkammer 5a untergebracht. In der Zuluftkammer 5a wird daher die Außenluft erwärmt oder gekühlt. Sie wird danach durch die Schlitze 1 b dem Raum als Zuluft zugeführt. Die Schlitze 1 b sind so gestaltet, dass die Zuluft mit einer mittleren Geschwindigkeit von maximal 0,15 m/s ausgeblasen wird. Dies verhindert Zugerscheinungen. Zudem ist die Zuluft auf den Boden bzw. die Decke gerichtet, was Zugerscheinungen noch zusätzlich vermindert.

Die Zuluft, die im Sommer den Wärmetauscher 5 durchströmt, transportiert Feuchtigkeit, die bei einer Temperatur von 10-12°C des Wärmetauschers 5 zu Kondenswasserbildung im Kühlbetrieb führt. Durch diesen Vorgang wird die Zuluft teilweise entfeuchtet, was zu einem angenehmen Raumklima führt.

Zum Ableiten des Kondenswassers ist eine Kondensatwanne 5b unterhalb des Wärmetauschers 5 vorgesehen. Die Kondensatwanne 5b verfügt über einen zur Seite hin fallenden Boden. Das anfallende Kondensat wird von dort über einen Kondensatablauf 5c mit Siphon abgeleitet.

In einem Installationsverrohrungskanal 9 sind ein Vorlaufrohr 10 und ein Rücklaufrohr 11 vorgesehen. Auch eine Elektroleitung kann hier untergebracht sein. Der Zulauf des Wärmetauschers 5 ist über ein Absperrventil 10a an das Vorlaufrohr 10 angeschlossen. Der Ablauf des Wärmetauschers 5 führt zu einem Dreiwegventil 6, welches alternativ (mit kontinuierlichem Übergang) die Verbindung zu einer Kurzschlussleitung 12 sowie zu einer Raumheizung bzw. Raumkühlung 7 herstellt. Die Raumheizung bzw. Raumkühlung 7 mündet mit ihrem Ablauf in die Kurzschlussleitung 12, und diese führt über ein Absperrventil 11a zum Rücklaufrohr 11.

In dem Beispiel ist über dem Installationsverrohrungskanal 9 ein Installationsanschlusskanal 13 vorgesehen, in dem nicht nur der Siphon des Kondensatablaufs 5c, sondern auch eine Elektroanschlussdose 14 und die Absperrventile 10a und 11a untergebracht sind. Der Installationsanschlusskanal ist durch eine abnehmbare Abdeckung zugängig.

Es ist zweckmäßig, wenn die maximale Einbaubreite 550 mm beträgt. Dadurch ist bei der standardisierten Holzrahmenbauweise der Einbau ohne Konstruktionsänderung möglich. In diesem Fall ist aber auch bei der standardisierten Trockenständerbauweise mit Metall-C-Profilen im Neubau sowie bei der Altbausanierung der Einbau ohne Konstruktionsänderung möglich.

Die erfindungsgemäße Raumklimaeinrichtung funktioniert wie folgt:

1. Kühlung

Die Kühlung der Zuluft erfolgt, indem der Wärmetauscher 5 mit einem kühlen, Wärme übertragenden Medium durchflossen wird, hierzu muss die entsprechende Technik (z.B. Kaltwassererzeuger) im Gebäude vorhanden sein.

Geht man von einer Raumtemperatur von 23°C und einer relativen Luftfeuchtigkeit von 50% aus, beträgt die Taupunkttemperatur 12°C. Steht ein Gewitter bevor, oder misst man die Luftfeuchtigkeit unmittelbar nach dem Niederschlag, kann die relative Luftfeuchtigkeit auf Werte über 90% ansteigen. In diesem Fall ist es für die Gesundheit und Leistungsfähigkeit des Menschen wichtig, dass die Zuluft zumindest teilweise entfeuchtet wird.

Für den Kühlkreislauf des Wärmetauschers wird eine Grenztemperatur für den Vorlauf von maximal 12,5°C festgelegt. Das anfallende Kondenswasser wird durch eine Kondensatwanne 5b unterhalb des Wärmetauschers 5 aufgefangen und abgeleitet. Um eine effiziente Raumkühlung im Sommer bei hohen Außentemperaturen zu erreichen ist die Abkühlung der Zuluft auf Grund des geringen Luftvolumenstroms nicht ausreichend. Erfindungsgemäß ist daher dem Wärmetauscher 5 ein Wand-/Decken- oder Fußboden-Flächenkühlsystem nachgeschaltet. Durch den Wärmeaustausch im Wärmetauscher erhöht sich die Temperatur des Kühlmediums von ca. 12°C auf ca. 15°C, wodurch eine Taupunktunterschreitung im Flächenkühlsystem vermieden wird.

Die Zulufterwärmung erfolgt, indem der Wärmetauscher 5 mit einem Wärme übertragenden Medium durchflossen wird und die Außenluft mittels des Zuluftventilators 4 den Wärmetauscher 5 durchströmt. Dadurch wird die Zuluft auf mindestens 22°C erwärmt. Erfindungsgemäß ist für die Abdeckung der Transmissionswärmeverluste des Raums ein Wand-/Decken- oder Fußboden-Flächenheizsystem nachgeschaltet. Für den Heizkreislauf des Wärmetauschers wird eine Vorlauftemperatur von vorzugsweise 40-55°C festgelegt. Durch den Wärmeaustausch im Wärmetauscher reduziert sich die Temperatur des Heizmediums auf ca. 35-50°C und ist mit diesem Temperaturniveau optimal für den Niedertemperatur-Wärmestrahlungsbetrieb geeignet. Die Wärmebereitstellung des Heizmediums kann durch Biomasse, Gas, Öl, Wärmepumpen, Solarenergie, Fernwärme etc. erfolgen.

Eine Einzelraumregelung garantiert eine bedarfsgerechte Lüftung und bietet dem Benutzer die Möglichkeit, in den Betrieb der Raumklimaeinrichtung einzugreifen. Unter bedarfsgerechter Lüftung ist ein Luftwechsel zu verstehen, der die Raumluftqualität auf dem erforderlichen Niveau hält und Bauschäden vermeidet, dabei aber nur ein Minimum des Raumluftvolumens austauscht. Die EnEV 2002 schreibt zudem vor, dass heizungstechnische Anlagen mit Wasser als Wärmeträger mit selbsttätig wirkenden Einrichtungen zur raumweisen Regelung der Raumtemperatur ausgestattet werden müssen. Erfindungsgemäß enthält daher jeder Raum einen Raumthermostat oder Raumtemperatursensor, der über ein Regelventil die Raumtemperatur bei Heiz- oder Kühlbetrieb steuert. Vorzugsweise ist auch in jedem Raum ein Luftqualitätsfühler, z.B. ein CO₂-Sensor, vorgesehen, der auf den Zuluftventilator 4 einwirkt und bedarfsgerecht den Frischluftanteil erhöht oder reduziert.

Um bei Ausfall der Heizwasserversorgung den Wärmetauscher 5 vor dem Einfrieren zu schützen, wird nach dem Wärmetauscher 5 in den Zuluftstrom ein Frostschutzthermostat 8 angeordnet, der bei Unterschreitung der Zulufttemperatur von 8°C den Zuluftventilator abschaltet und somit das Eindringen der kalten Zuluft in den Wasser führenden Bereich verhindert.

## Patentansprüche

1. Raumklimaeinrichtung mit einer Belüftung und mit einer Raumheizung bzw. Raumkühlung (7), wobei die Belüftung einen Zuluftventilator (4) und mindestens einen Wärmetauscher (5) zur Abgabe von Wärme und/oder Kälte an die Zuluft aufweist und wobei die Raumheizung bzw. Raumkühlung (7) durch mindestens einen Heiz- bzw. Kühlkörper, Wand-, Decken- und/oder Bodenheizung bzw. -kühlung realisiert ist, wobei weiters ein zentrales Wärme- und/oder Kühlsystem vorgesehen ist, das einen Wärmeträger zentral erwärmt und/oder kühlt, wobei der Wärmetauscher (5) der Belüftung und die Raumheizung bzw. Raumkühlung (7) in Serie an das zentrale Wärme- und/oder Kühlsystem angeschlossen sind, wobei der Wärmeträger zuerst den Wärmetauscher (5) durchströmt, **dadurch gekennzeichnet, dass** parallel zur Raumheizung bzw. Raumkühlung (7) eine Kurzschlussleitung (12) für den Wärmeträger vorgesehen ist, an deren Abzweigung ein Dreiwegventil (6) angeordnet ist, und dass das Dreiwegventil (6) und damit der Durchfluss des Wärmeträgers durch die Raumheizung bzw. Raumkühlung (7) in Abhängigkeit von der Raumtemperatur gesteuert ist.

2. Raumklimaeinrichtung nach Anspruch 1, **dadurch gekennzeichnet, dass** der Luftstrom der Belüftung in Abhängigkeit von einem im Raum angeordneten Luftqualitätsfühler, z.B. einem Kohlendioxidsensor, gesteuert ist, um einen minimalen, hygienisch erforderlichen Luftwechsel zu erreichen.

3. Raumklimaeinrichtung nach Anspruch 1 oder 2, **dadurch gekennzeichnet, dass** die Belüftung dezentral erfolgt und jeweils im Außenwandbereich eines Raumes angeordnet ist.

4. Raumklimaeinrichtung nach Anspruch 3, **dadurch gekennzeichnet, dass** die Belüftung zum Raum hin durch eine Abdeckung (1a) abgeschlossen ist und dass in der unteren und/oder oberen Stirnseite der Abdeckung (1a) Schlitze (1 b) für den Luftstrom vorgesehen sind.

5. Raumklimaeinrichtung nach Anspruch 4, **dadurch gekennzeichnet, dass** die Abdeckung (1a) zur Belüftung hin eine ebene Fläche und zum Raum hin eine gewölbte Fläche aufweist.

6. Raumklimaeinrichtung nach einem der vorstehenden Ansprüche, **dadurch gekennzeichnet, dass** im Außenluftanschluss der Belüftung ein Schalldämmelement (2a) integriert ist.

7. Raumklimaeinrichtung nach einem der vorstehenden Ansprüche, **dadurch gekennzeichnet, dass** im Ansaugkanal (2) oder in der Ansaugkammer (3) der Belüftung zur Luftreinigung ein Filter (3a, 3b) integriert ist.

8. Raumklimaeinrichtung nach Anspruch 7, **dadurch gekennzeichnet, dass** der Zuluftventilator (4) ein stufenlos regelbares Radialgebläse (4) mit Körperschallentkopplung ist, das nach dem Filter (3a, 3b) montiert ist.

9. Raumklimaeinrichtung nach Anspruch 8, **dadurch gekennzeichnet, dass** nach dem Radialgebläse (4) ein Überdruckkanal (4a) mit Luftdurchströmungsöffnungen zur gleichmäßigen Durchströmung des Wärmetauschers (5) angeordnet ist.

10. Raumklimaeinrichtung nach einem der vorstehenden Ansprüche, **dadurch gekennzeichnet, dass** im Zuluftstrom nach dem Wärmetauscher (5) ein Frostschutzthermostat (8) angeordnet ist, der bei Absinken der Zulufttemperatur auf unter +8°C den Zuluftventilator (4) abschaltet.
